# EUROPEAN PATENT APPLICATION

(11) **EP 4 456 630 A1**
(43) Date of publication of application: **30.10.2024**
(21) Application number: 24171511.9
(22) Date of filing: 22.04.2024
(51) Int. Cl.: H04W 72/02, H04W 72/40

(54) **SIDELINK PREDICTION**

(30) Priority: 26.04.2023 GB 202306121
(71) Applicant: Nokia Technologies Oy, 02610 Espoo (FI)
(72) Inventor: KOUSARIDAS, Apostolos, Munich (DE); SABOURI-SICHANI, Faranaz, Aalborg (DK); YU, Ling, Kauniainen (FI); VAN PHAN, Vinh, Oulu (FI); HIETALAHTI, Hannu Petri, Kiviniemi (FI)
(74) Representative: Nokia EPO representatives

(57) **Abstract**

Embodiments relate to an apparatus comprising means for predicting, for a first node at a first location, at least one second location(s) of said first node. The first node may be configured to transfer data to a second node via a first sidelink; for example, the first and second nodes may be part of a mobile communications network. The apparatus may further comprise a means for estimating a first radio parameter of the first sidelink at said second location(s). The apparatus may further comprise a means for determining, based on said estimated first radio parameter, if said first sidelink at said second location(s) meets at least one selection criterion.

## Description

### Field

Example embodiments relate to apparatus, systems, methods and/or computer programs for prediction of sidelinks between nodes in a mobile communications network.

### Background

Proximity based Services (ProSe) may be used for extending network coverage, connection range or for improving Quality of Service (QoS) a mobile communications network. For example, 5^{th} Generation (5G) mobile communications networks.

An example of ProSec involves establishing a datalink between two devices using a third device configured to act as a relay. For example, a User Equipment (UE) device may establish a sidelink with a suitable relay device. The relay device may then establish a sidelink with a third UE or an uplink/downlink with a base station such as a gNodeB (gNB).

Example uses of ProSe include public safety services or commercial services (e.g., Vehicle-2-Everything (V2X), Internet of Things (IoT) or other interactive services). There is an ongoing requirement for improvements in relaying of data between nodes in a mobile communications network.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising: means for predicting (or determining), for a first node at a first location, at least one second location(s) of said first node, wherein said first node is configured to transfer data to a second node via a first sidelink, wherein said first and second nodes are part of a mobile communications network; means for estimating a first radio parameter (e.g. a received power or congestion level) of said first sidelink at said second location(s); and means for determining, based on said estimated first radio parameter, if said first sidelink at said second location(s) meets at least one selection criterion.

In some embodiments, said apparatus further comprises means for determining a reconfiguration action if said first sidelink does not meet said selection criterion at said second location(s).

In some embodiments, said reconfiguration action is determined based on said predicted second location(s).

In some embodiments, said reconfiguration action comprises at least one of: changing a resource of said first sidelink; changing said selection criterion; establishing a second sidelink between said first node and a third node, wherein said second sidelink meets said selection criterion; or transferring at least part of said data using a datalink between said first node and a base station.

In some embodiments, said means for estimating comprises a means for estimating a signal strength of said first sidelink at said second location(s).

In some embodiments, said means for estimating comprises a means for estimating a congestion level of a resource of said first sidelink at said second location(s).

In some embodiments, said means for estimating comprises a means for estimating a channel busy ratio or channel occupancy ratio.

In some embodiments, said means for estimating comprises a means for receiving a first message from a fourth node located in a prediction zone substantially around said second location(s).

In some embodiments, said first message is sent in response to a second message, from said first and/or second node,

In some embodiments, said second message comprises a request for a measurement of said first radio parameter by said fourth node.

In some embodiments, said second message further comprises one or more conditions for said request.

In some embodiments, said conditions comprise one or more of a prediction zone, a measurement period, a reporting delay or a reporting condition.

In some embodiments, said first message comprises a measurement of or indicators of said first radio parameter by said fourth node at said prediction zone.

In some embodiments, said first message comprises sidelink control information.

In some embodiments, said apparatus further comprises means for predicting, for said second node at a third location, at least one fourth location(s) of said second node.

In some embodiments, said apparatus further comprises means for estimating a second radio parameter of said first sidelink at said fourth location(s).

In some embodiments, said apparatus further comprises means for determining, based on said estimated second radio parameter, if said first sidelink at said fourth location(s) meets a second selection criterion.

In some embodiments, said means for estimating a first radio parameter comprises a model configured to estimate said first radio parameter at said second location(s) based on measurements or indicators of said first radio parameter at a plurality of other locations.

In some embodiments, said second node is configured to relay said data from said first node to a fifth node or to said first node from a fifth node.

In some embodiments, said means for predicting comprises a means for receiving said second location(s) from a first entity.

In some embodiments, said second location(s) is different from said first location.

In some embodiments, said means for predicting is triggered by an event or a third message from a second entity.

In some embodiments, said first node comprises said apparatus.

In some embodiments, one or more of said nodes is a user equipment.

According to a second aspect, there is described a user equipment comprising an apparatus according to the first aspect.

Optional features of the second aspect may comprise any features of the first aspect.

According to a third aspect, there is described a method comprising: predicting, for a first node at a first location, at least one second location(s) of said first node, wherein said first node is configured to transfer data to a second node via a first sidelink, wherein said first and second nodes are part of a mobile communications network; estimating a first radio parameter of said first sidelink at said second location(s); and determining, based on said estimated first radio parameter, if said first sidelink at said second location(s) meets at least one selection criterion.

In some embodiments, said apparatus further comprises means for determining a reconfiguration action if said first sidelink does not meet said selection criterion at said second location(s).

In some embodiments, said reconfiguration action is determined based on said predicted second location(s).

In some embodiments, said reconfiguration action comprises at least one of: changing a resource of said first sidelink; changing said selection criterion; establishing a second sidelink between said first node and a third node, wherein said second sidelink meets said selection criterion; or transferring at least part of said data using a datalink between said first node and a base station.

In some embodiments, said estimating comprises estimating a signal strength of said first sidelink at said second location(s).

In some embodiments, said estimating comprises estimating a congestion level of a resource of said first sidelink at said second location(s).

In some embodiments, said estimating comprises estimating a channel busy ratio or channel occupancy ratio.

In some embodiments, said estimating comprises receiving a first message from a fourth node located in a prediction zone substantially around said second location(s).

In some embodiments, said first message is sent in response to a second message, from said first and/or second node,

In some embodiments, said second message comprises a request for a measurement of said first radio parameter by said fourth node.

In some embodiments, said second message further comprises one or more conditions for said request.

In some embodiments, said conditions comprise one or more of a prediction zone, a measurement period, a reporting delay or a reporting condition.

In some embodiments, said first message comprises a measurement of or indicators of said first radio parameter by said fourth node at said prediction zone.

In some embodiments, said first message comprises sidelink control information.

In some embodiments, said method further comprises predicting, for said second node at a third location, at least one fourth location(s) of said second node.

In some embodiments, said method further comprises estimating a second radio parameter of said first sidelink at said fourth location(s).

In some embodiments, said method further comprises determining, based on said estimated second radio parameter, if said first sidelink at said fourth location(s) meets a second selection criterion.

In some embodiments, said estimating a first radio parameter comprises a model configured to estimate said first radio parameter at said second location(s) based on measurements or indicators of said first radio parameter at a plurality of other locations.

In some embodiments, said second node is configured to relay said data from said first node to a fifth node or to said first node from a fifth node.

In some embodiments, said predicting comprises receiving said second location(s) from a first entity.

In some embodiments, said second location(s) is different from said first location.

In some embodiments, said predicting is triggered by an event or a third message from a second entity.

In some embodiments, said first node performs said method.

In some embodiments, one or more of said nodes is a user equipment.

According to a fourth aspect, there is provided a computer program product comprising a set of instructions which, when executed on an apparatus, is configured to cause the apparatus to carry out the method of: predicting, for a first node at a first location, at least one second location(s) of said first node, wherein said first node is configured to transfer data to a second node via a first sidelink, wherein said first and second nodes are part of a mobile communications network; estimating a first radio parameter of said first sidelink at said second location(s); and determining, based on said estimated first radio parameter, if said first sidelink at said second location(s) meets at least one selection criterion.

Optional features of the fourth aspect may comprise any features of the third aspect.

According to a fifth aspect, there is provided a non-transitory computer readable medium comprising program instructions stored thereon for performing a method, comprising: causing predicting, for a first node at a first location, at least one second location(s) of said first node, wherein said first node is configured to transfer data to a second node via a first sidelink, wherein said first and second nodes are part of a mobile communications network; causing estimating a first radio parameter of said first sidelink at said second location(s); and causing determining, based on said estimated first radio parameter, if said first sidelink at said second location(s) meets at least one selection criterion.

The program instructions of the fifith aspect may also perform operations according to any preceding method definition of the third aspect.

According to a sixth aspect, there is provided an apparatus comprising: at least one processor; and at least one memory including program code which, when executed by the at least one processor, cause the apparatus to: predict, for a first node at a first location, at least one second location(s) of said first node, wherein said first node is configured to transfer data to a second node via a first sidelink, wherein said first and second nodes are part of a mobile communications network; estimate a first radio parameter of said first sidelink at said second location(s); and determine, based on said estimated first radio parameter, if said first sidelink at said second location(s) meets at least one selection criterion.

The computer program code of the sixth aspect may also perform operations according to any preceding method definition of the third aspect.

### Brief Description of the Drawings

Example embodiments will now be described by way of non-limiting example, with reference to the accompanying drawings, in which:
Fig. 1 shows a mobile communication network according to one or more example embodiments.
Fig. 2 shows a mobile communication network according to one or more example embodiments.
Fig. 3 shows a mobile communication network according to one or more example embodiments.
Fig. 4 illustrates an apparatus according to one or more example embodiments.
Fig. 5 illustrates a flow diagram indicating processing operations that may be performed by an apparatus, according to one or more example embodiments.
Fig. 6 shows a mobile communication network according to one or more example embodiments.
Fig. 7 shows a mobile communication network according to one or more example embodiments.
Fig. 8 shows a mobile communication network according to one or more example embodiments.
Fig. 9 shows a mobile communication network according to one or more example embodiments.
Fig. 10 illustrates an apparatus according to one or more example embodiments.
Fig. 11 illustrates a flow diagram according to one or more example embodiments.
Fig. 12 illustrates a message sequence flow according to one or more example embodiments.
Fig. 13 illustrates an apparatus according to one or more example embodiments.
Fig. 14 shows an apparatus according to some example embodiments.
Fig. 15 shows a non-transitory media 1400 according to some embodiments.

### Detailed Description

Example embodiments describe an apparatus, method and computer program relating to prediction of sidelinks between nodes in a mobile communications network. For example, prediction of a radio parameter relating to a sidelink between two or more nodes. For example, a radio parameter may include signal strength, congestion level or indication of quality. In some example embodiments, one of the nodes is a relay node configured to relay data from a first node to a third node. In some example embodiments, one or more of the nodes may comprise a User Equipment, smartphone, robot, vehicle etc. In some example embodiments, the third node may comprise a base station.

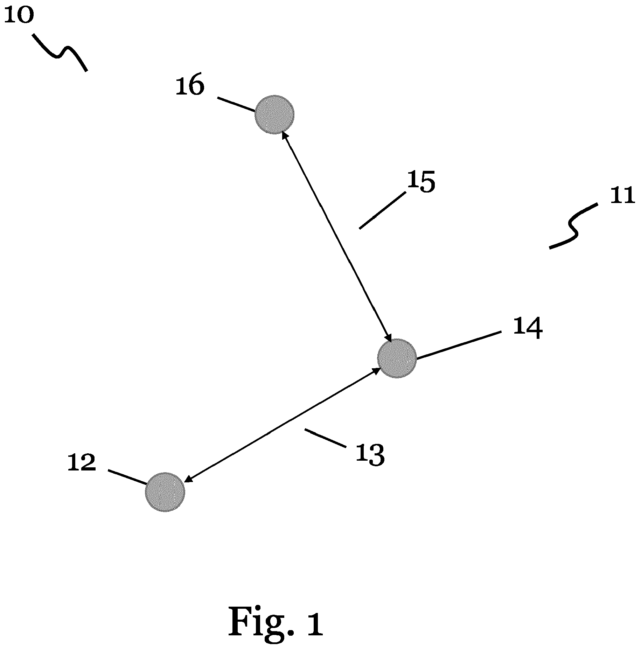

Fig. 1 shows a mobile communication network, indicated generally by reference numeral 10, according to one or more example embodiments.

The network 10 is a single path relay comprising an indirect communication link 11 between a first node 12 and a third node 16 via a second node 14. The single path relay 11 comprises a first sidelink 13 between the first node 12 at a first location and the second node 14. Data sent from the first node 12 to the second node 14 is later sent from the second node 14 to the third node 15 via a first datalink 15. The second node 14 therefore acts as a relay between the first node 12 and third node 16. In some embodiments, said second node 14 is configured to relay said data from said first node 12 to the third node 16 (e.g. the fifth node as set out in the appended claims) or to said first node 12 from the third node 16.

A single path relay 11 may improve network coverage to the first node 12 by enabling connection to the third node 16 even when the first node 12 is out of direct coverage with the third node 16.

In some embodiments, the first 12 and second 14 nodes are User Equipment (UE) devices; for example 5G enabled smartphones. In some embodiments, the first sidelink 13 comprises a PC5 sidelink communication according to the 3GPP standard. In some embodiments, the third node 16 is also UE e.g. a 5G smartphone. In some embodiments, the first datalink 15 comprises a PC5 sidelink communication according to the 3GPP standard. In other embodiments, the third node 16 comprises a base station such as a gNodeB (gNB). In some embodiments, the first datalink 15 comprises an uplink communication (Uu).

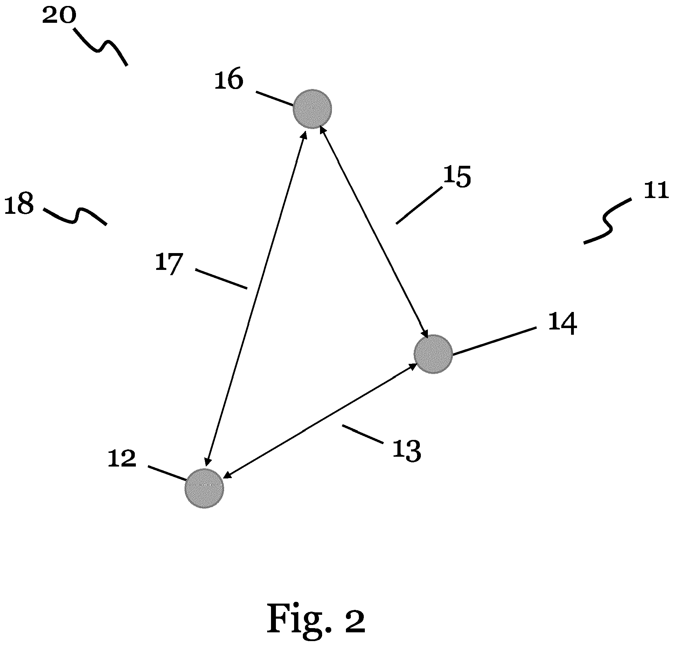

Fig. 2 shows a mobile communication network, indicated generally by reference numeral 20, according to one or more example embodiments.

The network 20 is a multi path relay comprising an indirect communication link 11 and a direct communication link 18 between a first node 12 and a third node 16.

Similar to network 10, the indirect communication link 11 comprises a first sidelink 13 between the first node 12 at a first location and the second node 14. Data sent from the first node 12 to the second node 14 is later sent from the second node 14 to the third node 15 via a first datalink 15. The second node 14 therefore acts as a relay between the first node 12 and third node 16. In some embodiments, said second node 14 is configured to relay said data from said first node 12 to the third node 16 or to said first node 12 from the third node 16.

In addition to network 10, the direct communication link 18 comprises a second datalink 17 between the first node 12 and third node 16.

In some embodiments, the first node 12 may utilise both the indirect 11 and direct 18 communication links to improve reliability or data rates with the third node 16.

In some embodiments, the first node 12 may be configured to duplicate connectivity between the indirect path 11 and direct path 18. This may comprise sending the same data packets over the indirect path 11 and direct path 18 to improve reliability of the network 20 and compensate for packet loss.

In some embodiments, the first node 12 may be configured to split connectivity between the indirect path 11 and direct path 18. This may comprise splitting the data packets between the indirect path 11 and direct path 18 to increase throughput i.e. data rate of the network 20.

In some embodiments, the first node 12 may be configured to alternate between the indirect path 11 and direct path 18 to improve resiliency of the network 20.

In some application, for example V2X services or future Virtual Reality (VR), Augmented Reality (AR) applications, the requirements for link quality of a single path or multi path relay exceed that of conventional consumer handheld devices. For example, the requirements may include additional or specific link quality requirements or provision of a threshold level of quality over a period of time.

The consistency of quality over a period of time for a datalink may depend on node density or interference between nodes or other emitters. In addition, the consistency of quality over a period of time of a datalink may also be dependent on the spatiotemporal dynamics of the nodes in the datalink. For example, where said nodes comprise high mobility vehicles, the quality i.e. QoS may degrade rapidly when one of the nodes moves location. In such a scenario, one or more of the nodes may determine a reconfiguration action in response to the degradation in quality of the datalink. A reconfiguration action may comprise a maintenance action or adaptation action. For example, upon moving location, one of the nodes may identify a trigger event indicating a change in a specific metric; for example, the metric may indicate a change in quality. For example, the node may report a decrease in Reference Signal Received Power (RSRP) below a threshold level from the other node. In response, the node may reselect a different node to act as a relay; the different node may be assessed to provide the necessary level of quality.

The 3rd Generation Partnership Project (3GPP), for example Rel-17 TS 23.304, Rel-18 TR 23.700-33, Rel-18 TR 23.700-33 clause 6.14, focuses on criteria such as (current) PC5 signal quality, application running on the UE, IP address, domain, DNN etc criteria as possible drivers for the path and relay selection. In addition, according to 3GPP TS 38.331 the following reporting events are introduced to trigger potential adaptation e.g. relay reselection:
- Event X2: Serving L2 U2N Relay UE becomes worse than threshold;
- Event Y2: Candidate L2 U2N Relay UE becomes better than absolute threshold.

In some circumstances, RSRP based criteria may not provide enough information to evaluate which relay adaptation and quality reconfiguration action should be selected, without considering additional factors that also affect the PC5 QoS such as availability of Sidelink (SL) resources. For instance, the PC5 QoS may be affected by the path-loss of the PC5 link, the configured SL resource pools, congestion level of the SL resource pools, the maximum transmission power (e.g. of the UE), the maximum Modulation and Coding Scheme (MCS), maximum number of retransmissions etc.

Some devices, such as a UE, may be able to measure congestion level of the SL resource pools in it's current location. A measure of congestion may include the Sidelink Channel Busy Ratio (CBR) or Channel occupancy Ratio (CR). A CBR may be the ratio of occupied sub-channels within a measurement window. For instance, CBR measured in slot n is defined as the portion of sub-channels in the resource pool whose SL RSSI measured by the UE exceed a (pre-)configured threshold sensed over a CBR measurement window [n-a, n-1], wherein a is equal to 100 or 100·2^{µ}slots, (where µ is the subcarrier spacing configuration factor), according to 3GPP TS 38.215. A transmitter UE may be configured to use its own measured sidelink CBR to configure its own transmission parameters.

The congestion level of a sidelink resource pool may change when the location of the device changes. A change in the congestion level may be indicative of the quality of the sidelink signal.

In some embodiments, relay reselection may involve the following phases and each phase of relay reselection comprises a duration:
- a discovery phase to identify another candidate relay device;
- connection establishment phase with said candidate relay device.

If the sidelink quality (or other criteria) deteriorates rapidly (i.e. in less time that it takes for the device to respond with a reconfiguration action - such as by relay reselection) then the consistency of the sidelink quality over time will be affected. In addition, it may lead to other effects such as late relay adaptation, wrong/sub optimal relay reselection or ping pong effects in relay switching.

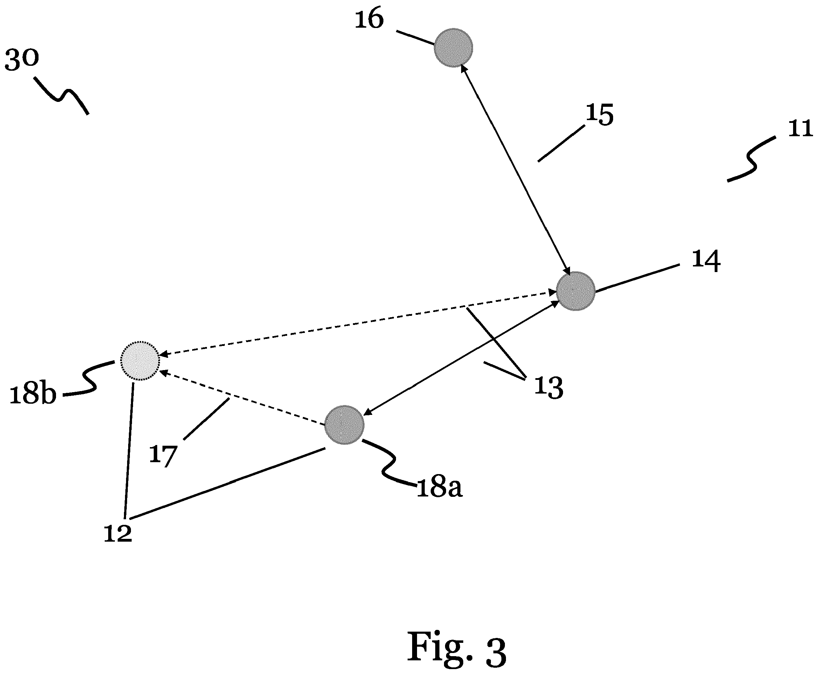

Fig. 3 shows a mobile communication network, indicated generally by reference numeral 30, according to one or more example embodiments.

Similar to network 10, described above, the network 30 is a single path relay comprising an indirect communication link 11 between a first node 12 (at a first location 18a) and a third node 16 via a second node 14. The single path relay 11 comprises a first sidelink 13 between the first node 12 at the first location 18a and the second node 14. Data sent from the first node 12 to the second node 14 is later sent from the second node 14 to the third node 15 via a first datalink 15. The second node 14 therefore acts as a relay between the first node 12 and third node 16. In some embodiments, said second node 14 is configured to relay said data from said first node 12 to the third node 16 or to said first node 12 from the third node 16.

In some example embodiments, the first node 12 may be stationary. In some example embodiments, the first node 12 may be moving and have a trajectory 17 e.g. moving in a straight line at a fixed speed/velocity. It may be possible to calculate a second (future) location 18b of the first node 12.

In some embodiments, if the first node 12 is located at the first location 18a at a first point in time, the second location 18b corresponds to the location of the first node 12 at a second (later) point in time. For example, where the first node 12 is stationary, the second location 18b may be the same or similar to the first location 18a. In another example, where the first node 12 is moving (such as trajectory 17), the second location 18b may be substantially different to the first location 18a. In some embodiments, it may be possible to calculate the second location 18b based on the first location 18a of the first node 12 and it's trajectory 17.

In some embodiments, the first sidelink 13 between the first node 12 at the second location 18b and the second node 14 may be maintained. In some embodiments, the first sidelink 13 may be affected by the change in location of the first node 12 from the first location 18a to the second location 18b. The change may comprise a change (e.g. deterioration) of the quality (e.g. QoS) of the first sidelink 13.

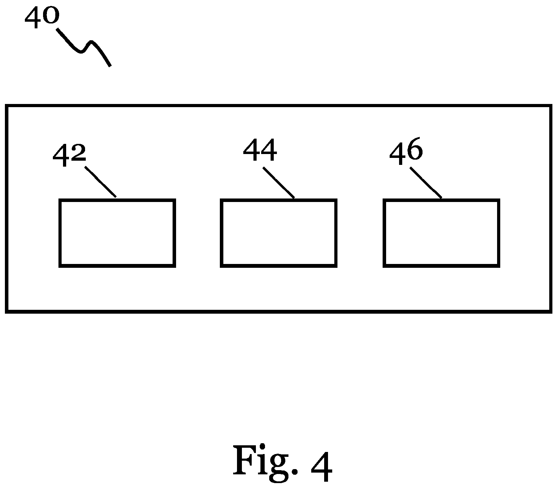

Fig. 4 illustrates an apparatus, indicated generally by reference numeral 40, according to one or more example embodiments.

The apparatus 40 comprises a means for predicting (or determining) 42, for a first node at a first location, at least one second location of said first node. The second location may be indicative of a future location of the first node. The second (future i.e. a future point in time) location may depend on the mobility status and pattern of the first node. The second location may be a function of a planned trajectory of the first node and a speed or velocity of the first node. The trajectory, speed, velocity, first location may be provided by a geolocation device such as a Global Positioning System or any other positioning device. The second location may also be provided based on the type of environment such as urban, rural, highways etc.

The second location may be within a prediction zone. The prediction zone may be determined by the first node. The prediction zone may be determined by the current location of the first, second and/or third nodes, their planned trajectory, or speed. The prediction zone may be a path or other geolocation information. The prediction zone may be an area around the second location. The area of the prediction zone may be a fixed area such as a circular, rectangular, ellipse area around one or more of the nodes. The prediction zone may comprise only the second location; thus is the same area as the second location. The prediction zone may comprise a plurality of locations; thus is a larger area than the second location. Having a prediction zone with a larger area than the second location may enable collection of a plurality of measurements of the first radio parameter in the prediction zone to enable estimation/prediction of the first radio parameter at the second location. The prediction zone may have a smaller area than the second location. The prediction zone may correspond to the zone ID for a sidelink communication.

The second location may be a function of an amount of time in the future or a prediction horizon. The prediction horizon may comprise one or more points in time. Each point in time may be a fixed period of time in the future. The prediction zone may also be a function of the prediction horizon. The prediction horizon may depend on the type of application for example the type of ProSe application, the mobility profile of one or more of the nodes or the type of environment.

In some example embodiments, the second location, prediction zone or prediction horizon may be provided to the apparatus by another entity. For example, another network entity or application entity.

In some example embodiment, the second location is different to the first location.

In some example embodiment, the second location is the same as the first location.

The apparatus 40 may also comprise means for estimating 44 a first radio parameter. The first radio parameter may be indicative (i.e. an indication of or a measurement of) of a first sidelink at the second location. The first sidelink may be configured for transferring data between said first node and second node. The second node may be further configured to relay said data to/from said first node from/to a third node.

In some example embodiments, the first radio parameter may include received power of a signal transmitted by the second node e.g. the RSRP. In some example embodiments, the first radio parameter may include a congestion level of a resource pool (e.g. sidelink resource pool) at the first location. For example, the first radio parameter may include the CBR at the first location.

In some example embodiments, an indicator of the first radio parameter may include data in the first sidelink or be related to the data; for example, a Modulation and Coding Scheme (MCS) of the first sidelink, number of Hybrid Automatic Repeat Request (HARQ) retransmissions, amount of frequency resources.

In some example embodiments, an indicator of the first radio parameter may be the Resource Reservation Interval (RRI) of the SCI. In some embodiments the RRI may also provide an indication of future expected transmitted load of neighbouring devices/nodes. In some embodiments the RRI may be used to estimate a future change in CBR.

In some example embodiments, the first sidelink may be a device-to-device communication signal. For example a Long Term Evolution (LTE) Vehicle-to-Everything (V2X) sidelink transmission according to the 3GPP specification, also known as PC5. In PC5, the data transferred between the nodes is on a Physical Sidelink Shared Channel (PSSCH). It will be understood that such a sidelink transmission is an example and other similar transmission could be used.

The second node may be configured to relay the data to/ from the first node from/to a third node (e.g. another device or a base station). The second node may be a relay device in a Proximity based Service (ProSe) as described above; for example, as part of a 5G system. For example, the second node may comprise a PC5 based architecture according to 3GPP TS 23.304 Rel-17. The second node may be configured to provide support as a relay device for UE-to-UE or multi-path communication.

The apparatus 40 may further comprise a means for determining 46 if said first sidelink at said second location meets a first of at least one selection criterion. This may be determined based on said estimated first radio parameter. For example, the first selection criterion may comprise providing a minimum level of quality for the datalink i.e. above a predetermined threshold level of quality. The level of quality may be directly determined by the estimated radio parameter such as congestion level of a resource or CBR or CR. In some embodiments, the first selection criterion may comprise (or further comprise) a minimum of one or more of data rate, delay, latency, reliability, signal strength or RSRP or received signal strength indicator (RSSI). In some embodiments, the first selection criterion may comprise (or further comprise) a maximum of one or more of packet drop rate, packet loss. In some embodiments, the first selection criterion may comprise (or further comprise) a service code of a ProSe communication. In some embodiments, the first selection criterion may comprise (or further comprise) an ID base discovery mechanism at the second location.

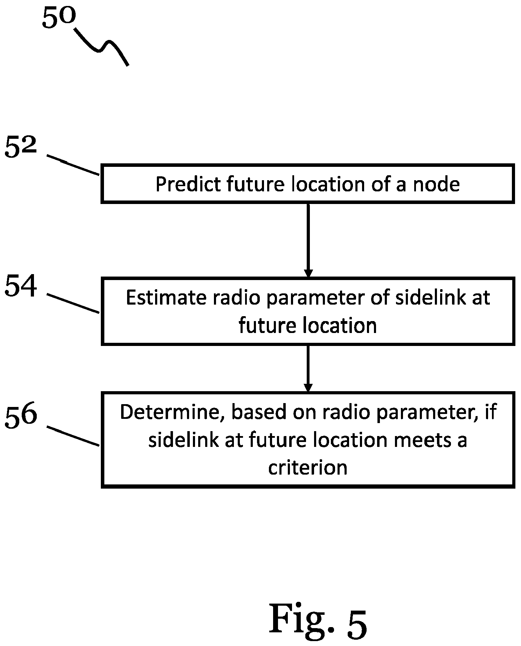

Fig. 5 illustrates a flow diagram, indicated generally by reference numeral 50, indicating processing operations that may be performed by an apparatus (such as apparatus 40), according to one or more example embodiments. The processing operations may be performed by hardware, software, firmware or a combination thereof. For example, the processing operations may be performed by a device in a network for example a User Equipment (UE), vehicle, drone or robot etc.

A first operation 52 may comprise predicting, for a first node at a first location, at least one second location(s) of said first node, wherein said first node is configured to transfer data to a second node via a first sidelink, wherein said first and second nodes are part of a mobile communications network

A second operation 54 may comprise estimating a first radio parameter of a first sidelink at said second location(s).

A third operation 56 may comprise determining, based on said estimated first radio parameter, if said first sidelink at said second location meets a first of at least one selection criterion.

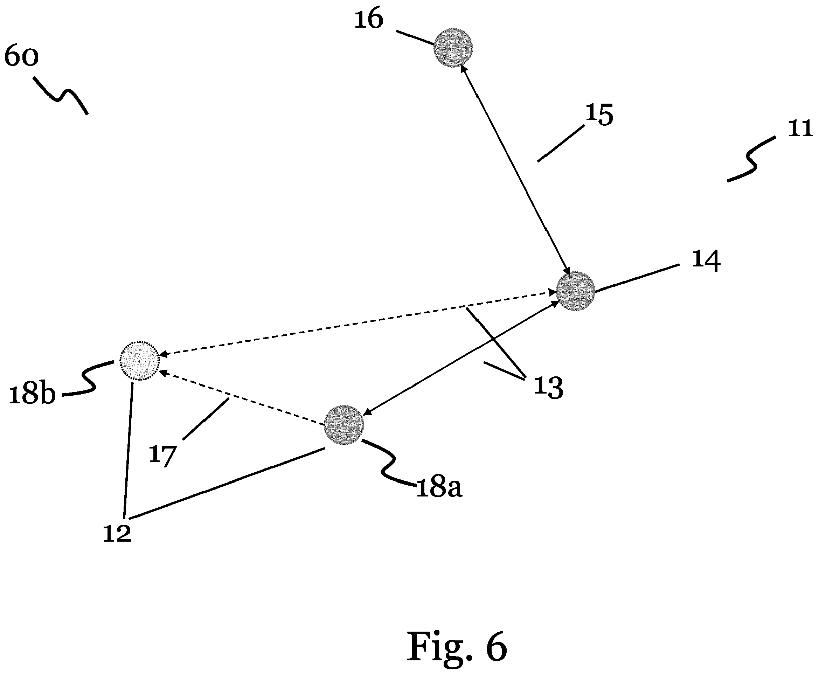

Fig. 6 shows a mobile communication network, indicated generally by reference numeral 60, according to one or more example embodiments.

Similar to network 10 or 30, described above, the network 60 is a single path relay comprising an indirect communication link 11 between a first node 12 (at a first location 18a) and a third node 16 via a second node 14. The single path relay 11 comprises a first sidelink 13 between the first node 12 at the first location 18a and the second node 14. Data sent from the first node 12 to the second node 14 is later sent from the second node 14 to the third node 15 via a first datalink 15. The second node 14 therefore acts as a relay between the first node 12 and third node 16. In some embodiments, said second node 14 is configured to relay said data from said first node 12 to the third node 16 or to said first node 12 from the third node 16.

In some example embodiments, the first node 12 maybe moving and have a trajectory 17 e.g. moving in a straight line at a fixed speed/velocity.

An apparatus (not shown) such as apparatus 40 described in relation to Fig. 4 may comprise a means for predicting, for the first node 12 at the first location 18a, a second location 18b of the first node 12 (for example, based on the trajectory 17). The apparatus may further comprise a means for estimating a first radio parameter of the first sidelink 13 at the second location 18b (for example, the congestion of a resource relevant to the first sidelink 13 at the second location 18b). The apparatus may further comprise a means for determining, based on the estimated first radio parameter, if the first sidelink 13 at the second location 18b meets a first of at least one selection criterion (for example, if the congestion level of the resource is above a certain threshold level).

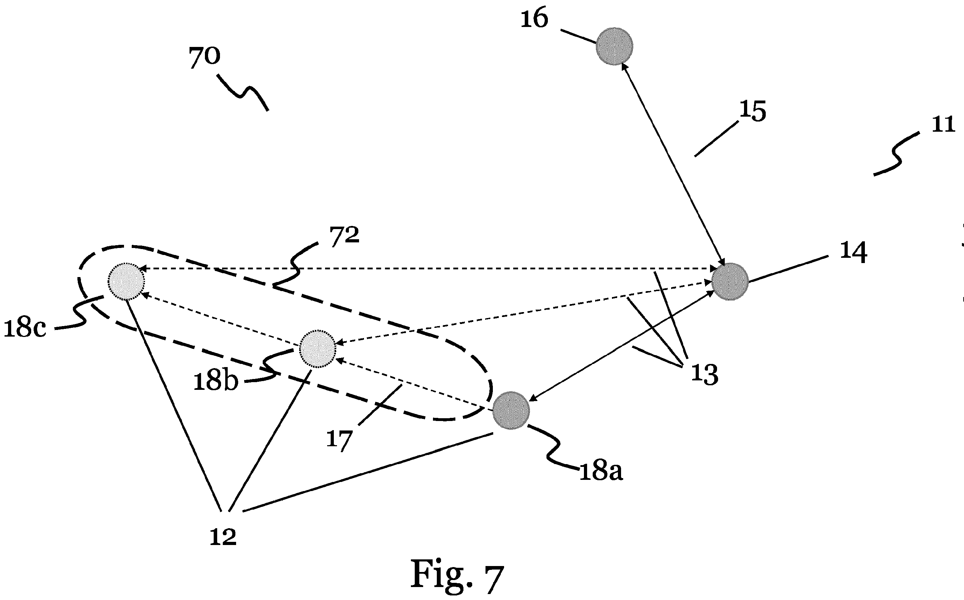

Fig. 7 shows a mobile communication network, indicated generally by reference numeral 70, according to one or more example embodiments. The network 70 may be the same or similar to network 60 described above.

In the same way as in network 60, the first node 12 may be moving and have a trajectory 17. The first node 12 has a first location of 18a at a first point in time. As a result of trajectory 17, at a second point in time, the first node 12 will move to a second location 18b. At a third point in time, the first node 12 will move to a third location 18c. The second location 18b and third location 18c may be predictable based on the trajectory 17. The prediction of the second and third locations 18b,18c may be provided by the apparatus (e.g. prediction means) or an external entity (e.g. another network entity).

In some example embodiments, an apparatus (such as apparatus 40) may predict/determine a prediction zone 72 indicative of the second and/or third locations 18b, 18c. An example of a prediction zone 72 is illustrated in Fig. 7. The prediction zone 72 may be a geographical area around the second and/or third locations 18b, 18c.

In some example embodiments, an apparatus (such as apparatus 40) may predict/determine a prediction horizon. The second and third points in time may form a prediction horizon. The prediction horizon may include fewer or additional points in time. The prediction horizon may depend on the application type, mobility status of the first node (or second node) or pattern. In some embodiments, the prediction zone 72 is determined by the prediction horizon.

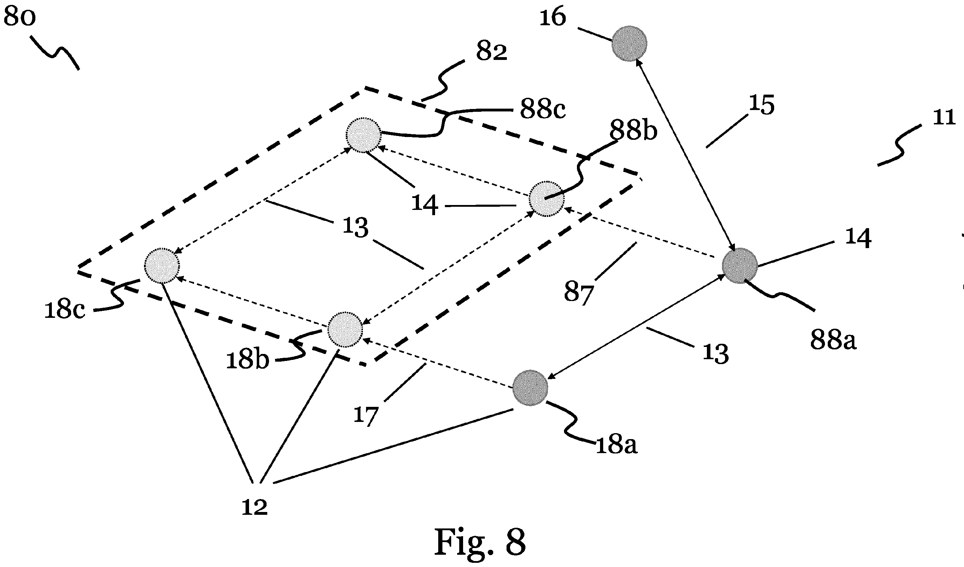

Fig. 8 shows a mobile communication network, indicated generally by reference numeral 70, according to one or more example embodiments. The network 80 may be the same or similar to network 60 or 70 described above.

In the same way as in network 60 or 70, the first node 12 may be moving and have a trajectory 17. In addition, the second node 14 may also be moving and have a trajectory 87.

For example, at a first point in time, the first node 12 has a first location of 18a and the second node 14 has a fourth location of 88a. At a second point in time, the first node 12 will move to a second location 18b and the second node 14 has a fifth location of 88b. At a third point in time, the first node 12 will move to a third location 18c and the second node 14 will move to a sixth location 88c. The locations 18b, 18c, 88b and/or 88c may be predictable based on the trajectories 17 and 87. The prediction locations 18b, 18c, 88b and/or 88c may be provided by the apparatus (e.g. prediction means) or an external entity (e.g. another network entity).

In some example embodiments, an apparatus (such as apparatus 40) may predict/determine a prediction zone 82 indicative of locations 18b, 18c, 88b and/or 88c. An example of a prediction zone 82 is illustrated in Fig. 8. The prediction zone 82 may be a geographical area around the locations 18b, 18c, 88b and/or 88c. In some embodiments, the prediction zone comprises one or more sub-zones for different time instances (T1, T2,...) which may simplify the prediction problem.

In some example embodiments, an apparatus (such as apparatus 40) may predict/determine a prediction horizon. The second and third points in time may form a prediction horizon. The prediction horizon may include fewer or additional points in time. The prediction horizon may depend on the application type, mobility status of the first node (or second node) or pattern. In some embodiments, the prediction zone 82 is determined by the prediction horizon.

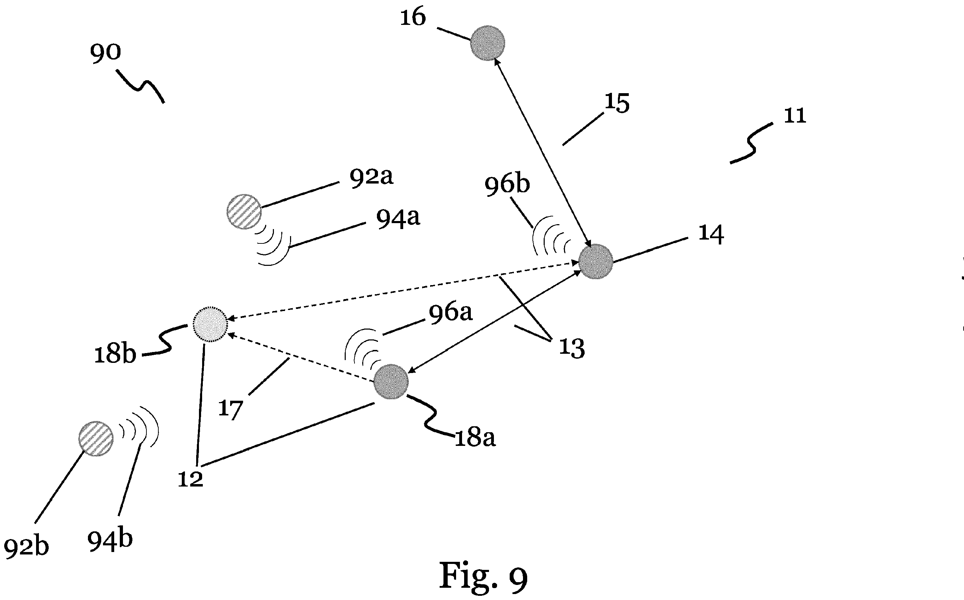

Fig. 9 shows a mobile communication network, indicated generally by reference numeral 90, according to one or more example embodiments. The network 90 may be the same or similar to network 60, 70 or 80 described above.

In some example embodiments, an apparatus (such as apparatus 40) may comprise a means for estimating a first radio parameter of the first sidelink 13 at the second location 18b (which may be the same as or similar to estimating means 44 described above in relation to Fig. 4).

In some example embodiments, the means for estimating may comprise a means for estimating a signal strength of said first sidelink 13 at said second location(s) 18b.

In some example embodiments, the means for estimating may comprise a means for estimating a congestion level of a resource of said first sidelink 13 at said second location(s) 18b.

In some example embodiments, the means for estimating may comprise a means for estimating a channel busy ratio of a resource of said first sidelink 13 at said second location(s) 18b.

In some example embodiments, the estimating means may comprise a means for receiving a one or more first message(s) 94a, 94b from one or more fourth nodes 92a, 92b (shown in Fig. 9 as partially filled circles). The fourth nodes 92a, 92b may be located substantially at or near to the second location 18b (or in a prediction zone around said second location 18b). The fourth nodes 92a, 92b may transmit the one or more first message(s) 94a, 94b.

In some example embodiments, the fourth node 92a, 92b is configured to send the first message 94a, 94 in response to a second message 96a, 96b. The second message 96a, 96b may be received by the fourth node 92a, 92b or another entity. The second message 96a, 96b may be sent from a requesting node. For example, the requesting node may be said first node 12 and/or second node 14.

In some example embodiments, the second message 96a, 96b may comprise a request for a measurement of said first radio parameter by said fourth node 92a, 92b. In some example embodiments, the first message 94a, 94b may comprise a measurement of said first radio parameter by said fourth node 92a, 92b at or near to said second location 18b (i.e. in a prediction zone around said second location 18b). In some example embodiments, the first message 94a, 94b may comprise an indicator of said first radio parameter by said fourth node 92a, 92b at or near to said second location 18b (or in a prediction zone around said second location 18b).

In some example embodiments, the second message 96a, 96b may further comprise one or more conditions for said request. For example, a condition may be a criterion for the fourth node 92a, 92b to send the first message 94a, 94b. For example, a condition may be that the fourth node 92a, 92b is located in a prediction zone and/or comprises a measurement period, a reporting delay or a reporting condition.

In some example embodiments, the first message 94a, 94b comprises Sidelink Control Information (SCI) according to the 3GPP standard. For example, the SCI SL Tx parameter settings (i.e. the Physical Sidelink Shared Channel (PSSCH) Transmit parameters) may be based on configured *sl-CBR-PriorityTxConfigList* specified in TS 38.321 and TS 38.331. Such settings may be selected based on the locally measured CBR. For example, the SCI may comprise the indicated Modulation and Coding Scheme (MCS), number of HARQ retransmissions, amount of frequency resources, priority etc of the fourth node 92a, 92b. Thus, the SCI settings may provide indirect information about the congestion or CBR that the fourth node 92a, 92b has measured. For example, a more robust MCS could be selected when the congestion levels are higher (i.e. high CBR).

In some example embodiments, the Resource Reservation Interval (RRI) or Resource Reservation Period (RRP) of the SCI may provide an indication of the future/expected data traffic requirements of the fourth nodes 92a, 92b. In some example embodiments, the short term memory of RRI may provide an indication of an estimate of the load of each of the fourth nodes 92a, 92b.

In some example embodiments, the first message 94a, 94b may be used by the requesting node 12, 14 to drive the means for estimating the first radio parameter. For example, the second message 96a, 96b could be sent to one or more specific fourth node 92a, 92b. For example, the fourth nodes 92a, 92b may comprise IDs; which may be included in the first message 94a, 94b e.g. as according to SCI format 2-B. For example, the fourth nodes 92a, 96b may be located in specific locations or Zone IDs; the location of the fourth node 92a, 92b may be specified in the first message 94a, 94b e.g. in the SCI e.g. as according to SCI format 2-B in case of SL groupcast with NACK-only HARQ associated also with other filters e.g., the RRP or MCS value.

In some example embodiments, the second message 96a, 96b comprises one or more of the following:
- Prediction Zone. For example, similar to prediction zone 72 or 82 described above in relation to Figs 7 and 8 above.
- Prediction horizon.
- CBR_measurement_period indicates a minimum number of required monitored CBR values. May increase the certainty for an accurate estimation of CBR levels by the respective fourth nodes 92a, 92b to avoid impact of temporal effects. The CBR_measurement_period may depend on the prediction and the type of the ProSe App that is served by the relay. This parameter may be configured at the second node 14 or may be provided by the Policy Control Function (PCF) or an Application Function (AF).
- Reporting delay: may indicate a deadline for reporting that may be needed.
- Reporting condition: reports could only be exchanged based on a defined condition. Examples of such conditions may include:
   ∘ the measured CBR is below/above a threshold (limit traffic) and/or
   ∘ the variance of the measured CBR is above/below a threshold (report's reliability/accuracy) and/or
   ∘ the absolute (or relative to the remote UE) speed of the monitoring UE is above/below a threshold.

The reporting condition may support limitation of the traffic of the first message 94a, 94b and/or reduce unreliable measurements of the first radio parameter.

In some example embodiments, the thresholds for the above conditions may be pre-configured by the second node 14 or provided by a PCF or AF.

In some example embodiments, the fourth nodes 92a, 92b may determine, for example based on one or more of the above conditions, whether to transmit the first message 94a, 94b. For example, the fourth nodes 92a, 92b may receive the prediction zone condition in the second message 96a, 96b, identify whether they are in the prediction zone (e.g. using a known positioning method) and use this information to determine whether to transmit the first message 94a, 94b.

In some example embodiments, the fourth nodes 92a, 92b may determine whether to transmit the first message 94a, 94b based on a prediction time horizon.

In some example embodiments, the fourth nodes 92a, 92b may stop sending first messages 94a, 94b if it is determined that the fourth node 92a, 92b no longer meets the condition. For example, if the fourth node 92a, 92b moves out of a prediction zone.

In some example embodiments, the fourth nodes 92a, 92b may determine whether the first message 94a, 94b is still needed and should be transmitted according to the criteria (i.e. reporting condition) set by the requesting node e.g., first node 12 or second node 14.

In some example embodiments, additional information relating to the fourth nodes 92a, 92b may provide indicators of the first radio parameter or be used to predict/determine future estimates of the first radio parameter. This may help to estimate whether and how the resource requirements may change at the second location 18b or prediction zone. The future estimates maybe along the prediction horizon. For example, the evolution of the first radio parameter across one or more points in time in the future or the prediction horizon. For example, the evolution of congestion or CBR may be determined from one or more of the following:
- Statistical information e.g., expected data traffic related to the time of day received by the network (e.g., NEF, NWDAF, or the PCF using policy rules and parameters);
- Mobility profile (speed, direction) of the fourth nodes 92a, 92b in a prediction zone or at (or near) the second location 18b;
- Artificial Intelligence (AI)/Machine Learning (ML) may be applied on prior stored data (history) with e.g., location related CBR, CBR slope evaluation, mobility profile of fourth nodes 92a, 92b (speed, direction);
- Channel profile information of the area at (or near) the second location 18b or part of a prediction zone, which can provide an indication of required resources, considering the data traffic requirements.

In some example embodiments, said means for estimating a first radio parameter comprises a model configured to estimate said first radio parameter at said second location(s) 18b based on measurements or indicators of said first radio parameter at a plurality of other locations such as the location of fourth nodes 92a, 92b.

In some example embodiments, the first message 94a, 94b and/or second message 96a, 96b may be provide using multi-hop; for example, if the first node 12 is unable to communicate directly with the fourth node 92a, 92b.

In some example embodiments, the first message 94a, 94b comprises a descriptor relevant to the respective fourth node 92a, 92b. For example, the fourth node 92a, 92b may transmit a first message 94a, 94b comprising a measured CBR value and the respective CBR descriptor.

In some example embodiments, the means for estimating is configured to estimate the first radio parameter based on the first message 94a, 94b. For example, if the first message 94a, 94b comprises a measurement of the first radio parameter by the respective fourth node 92a, 92b. Alternatively (or in addition), if the first message 94a, 94b comprises SCI from the respective fourth node 92a, 92b; as described above. In addition, the RRI may also be used to estimate the first radio parameter.

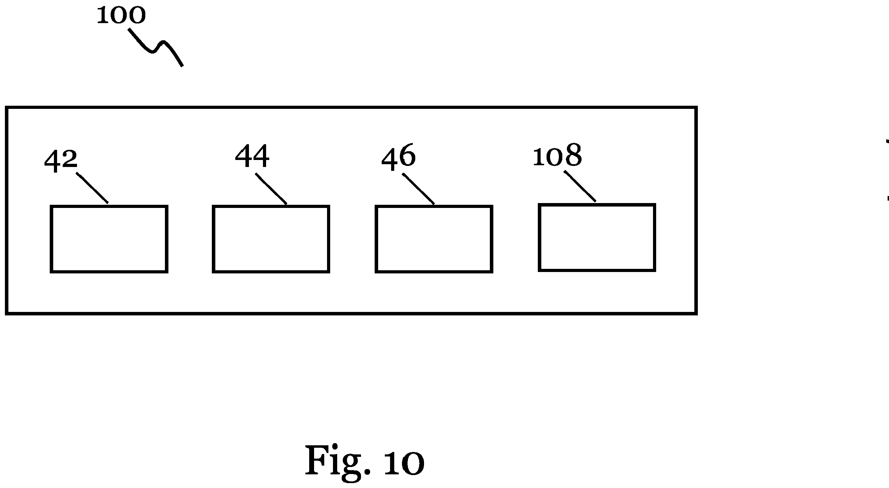

Fig. 10 illustrates an apparatus, indicated generally by reference numeral 100, according to one or more example embodiments.

The apparatus 100 may comprise a means for predicting 42, means for estimating 44 and means for determining 46; which are the same as those in apparatus 40 described above in relation to Fig. 4.

In addition, apparatus 100 may further comprise a means for determining 108 a reconfiguration action. The means for determining 108 may determine a reconfiguration action if said first sidelink does not meet said first selection criterion at said second location(s).

In some example embodiments, the reconfiguration action is selected and/or configured by the requesting node (for example, the first node 12 or the second node 14).

In some example embodiments, the reconfiguration action is selected and/or configured by the third node 16; which may be a device (similar to the first node 12 or second node 14) or a base station.

In some example embodiments, the reconfiguration action comprises changing a resource of said first sidelink.

In some example embodiments, the reconfiguration action comprises changing said first selection criterion.

In some example embodiments, the reconfiguration action comprises establishing a second sidelink between said first node and a fourth node, wherein said second sidelink meets said first selection criterion.

In some example embodiments, the reconfiguration action comprises transferring at least part of said data using a datalink between said first node and a base station.

In some example embodiments, the reconfiguration action comprises one or more of the above example reconfiguration actions.

In some example embodiments, the reconfiguration action(s) may be determined based on said predicted second location(s). For example, if the second location is near a fourth node, the action may comprise establishing a second sidelink between the first node and the fourth node.

In some example embodiments, the reconfiguration action(s) may be determined based on the estimated first radio parameter. For example, if the first radio parameter comprises a congestion level or CBR, the reconfiguration action may comprise an action to improve congestion or CBR e.g. establishing a datalink with the base station, establishing a second sidelink with a fourth node etc.

In some example embodiments, one or more of the apparatus 40 or 100, means for prediction 42, means for estimating 44, means for determining 46 or means for determining a reconfiguration action 108 are triggered (i.e. actuated or activated) by a trigger event or third message from a second entity. For example, a trigger event may include the estimated first radio parameter is above or below a predefined or configured threshold. For example, the means for predicting 42 may be triggered if a measured SL-RSRP and/or direct path's Uu RSRP measured at the first node and/or Uu RSRP measured from the second node to the third node is below a predefined or configured threshold and/or QoS related events in term of e.g. packet data rate, packet delay, packet error rate above or below a predefined or configured threshold and/or offset).

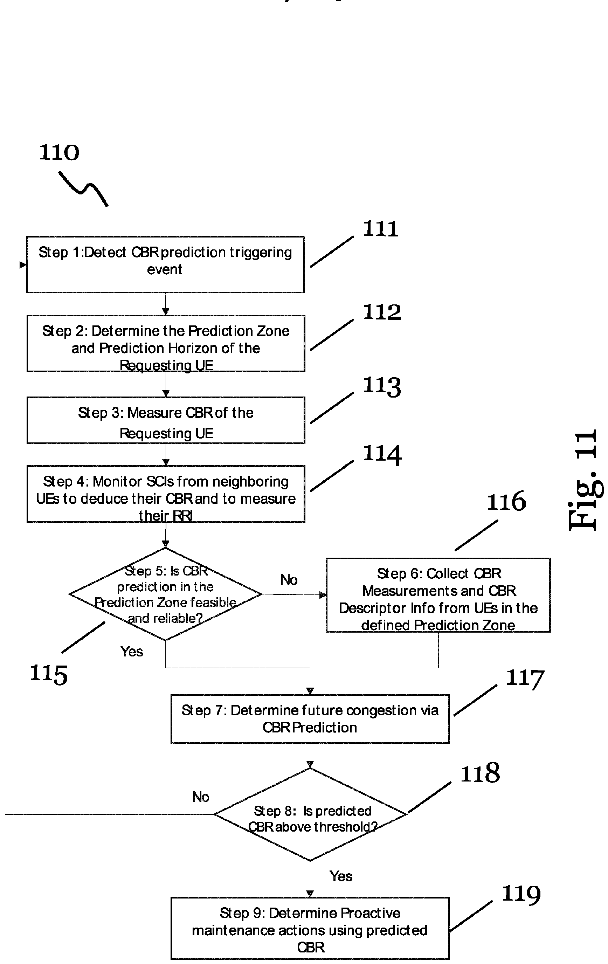

Fig. 11 illustrates a flow diagram, indicated generally by reference numeral 110, according to one or more example embodiments.

In some embodiments, the first node and second node (and any fourth nodes) comprise User Equipment (UE) such as a smartphone. In some embodiments, the third node comprises a Base Station (BS).

In a first step 111, a requesting UE (which may be the first node or second node or another node or entity) detects a trigger event for CBR prediction. For example, the trigger event may be a measured SL-RSRP and/or direct path's Uu RSRP measured at the remote UE and/or Uu RSRP measured from the Relay UE to the BS is below a predefined or configured threshold and/or QoS related events in term of e.g. packet data rate, packet delay, packet error rate above or below a predefined or configured threshold and/or offset. In some example embodiments, in the first step 111, the CBR prediction may be enabled with the establishment of a Single Path (SP) or Multi Path (MP) relay (e.g., in Split configuration). In some example embodiments, the CBR prediction may be an always-on feature along the 'lifetime"/duration of a relay to ensure QoS availability. In addition, the CBR prediction may be part of the discovery phase of a relay UE.

In a second step 112, a required prediction zone and prediction horizon are determined. In some example embodiments, in the second step 112, the prediction zone is determined by the Requesting UE according to the current location of Remote and Relay UEs, their planned trajectory, speed and required prediction horizon. The prediction horizon depends on the used ProSe Application type, UEs mobility profile, the type of the environment (e.g., urban, rural, highways) etc. The prediction zone may be described in terms of path or Geolocation information or can be geographically-Scoped (e.g., circular area, rectangular area, ellipsoidal area) or reuse the zone ID for SL communication. In some embodiments, the possible constraints or restrictions such as the maximum prediction distance or time may be (pre)configured by the serving network (e.g., Policy Control Function (PCF)) or be autonomously determined at the UE.

In a third step 113, a local CBR is measured by the Requesting UE.

In a fourth step 114, the transmitted Sidelink Control Information (SCI) message of the UEs that are in the sensing range of the Requesting UE are monitored and information of the SCI message could be used (e.g., MCS, number of HARQ retransmissions, amount of frequency resources) to make an indication of the CBR that one or more neighboring UEs may measure at its own location. Also, the Resource Reservation Interval (RRI) of the SCI can provide an indication of future expected transmitted load of the neighboring UE, helping to estimate how the CBR could change in the next seconds.

In some example embodiments, in the fourth step 114, the Requesting UE detects the broadcasted Sidelink Control Information (SCI) messages transmitted by neighboring UEs. The SCI received from neighboring UEs and specifically information such as the indicated Modulation and Coding Scheme (MCS) of a neighboring UE may provide (indirectly) information about the CBR values that the neighbouring UE has measured. The values that a neighboring UE sets to some of the SCI elements (e.g., referred to SL Tx parameter settings based on configured sl-CBR-PriorityTxConfigList specified in TS 38.321 and TS 38.331 including the MCS, number of HARQ retransmissions, amount of frequency resources) are decided taking into consideration their locally measured CBR. For example, a more robust MCS could be selected when the congestion levels are higher (i.e. high CBR). Hence, by receiving and monitoring the SCI messages of neighboring UEs and the values of specific information elements then the receiver (i.e., the Requesting UE in the particular case) can indirectly make an estimation of the CBR of the other (neighboring) UEs. For example, if the Requesting UE monitored the MCS range, the amount of frequency resources and/or the priority indicated in the detected SCIs are within the configured PSSCH Tx parameters for certain CBR range, the Requesting UE can estimate the CBR range that the neighboring UEs measured on the SL resource pool. The estimated CBRs may be used for the CBR prediction of the requesting UE in the defined prediction zone.

In some example embodiments of the fourth step 114, the monitoring of the Resource Reservation Interval (RRI)/Resource Reservation Period (RRP) of the SCI could provide an indication of future/expected data traffic requirements of a neighboring UE. In some example embodiments, the short term memory of RRI could be used for a more accurate estimation of the load of each UE.

In some example embodiments of the fourth step 114, the SCI information monitored by the Requesting UE may be used to drive the CBR measurement request of step 116 and/or the CBR prediction process of step 117. For instance, the CBR measurement request message (step 116) may be sent to specific UE IDs that are included in the SCI message (format 2-B). In some example embodiments, the CBR prediction (step 117) could be conducted for specific locations or Zone IDs as those are specified in the SCI message (format 2-B in case of SL groupcast with NACK-only HARQ) associated also with other filters e.g., the RRP or MCS value.

In a fifth step 115, the Requesting UE determines whether the collected information from the previous steps is adequate in order to cover the identified prediction zone as well as whether the collected information could lead to an accurate CBR prediction. If more information is needed then the process moves to the sixth step 116. If not then the seventh step 117 is activated.

In a sixth step 116, (if standards allow) the Requesting UE requests and collects from UEs in the prediction zone their measured CBR and descriptor information of the measured CBR. In some example embodiments, in the sixth step 116, the Requesting UE transmits the CBR measurement request to its proximity UEs that are located inside the prediction zone (i.e. which has been defined by the Requesting UE) to ask about their CBR report. The message may comprise one or more of the following information:
- Prediction Zone (as described in detail above);
- CBR_measurement_period - which may indicate a minimum number of required monitored CBR values. The measurement period may improve certainty or accuracy of an estimation of CBR levels by the respective UEs; which may avoid impact of temporal effects. The CBR_measurement_period may depend on the prediction and the type of the ProSe App that is served by the relay. This parameter may be configured at the Remote/Relay UE or may be provided by the PCF or an Application Function (AF).
- Reporting delay - which may indicate a deadline for reporting that may be needed, for example when considering the on-the-fly real-time nature of the prediction;
- Reporting condition - which may be used to limit the SL traffic corresponding to the exchange of CBR measurements or avoid unreliable measurements. Reports may be exchanged based on a defined condition. For example, reporting when the measured CBR is below/above a threshold (limit traffic) and/or the variance of the measured CBR is above/below a threshold (report's reliability/accuracy) and/or the absolute (or relative to the remote UE) speed of the monitoring UE is above/below a threshold.

The thresholds for the above conditions may be pre-configured at the Remote UE (/Relay UE) or provided by the PCF or an AF.

Multi-hop request (and reporting) may be needed, since the UEs in the prediction zone may not be directly reachable by the Requesting UE.

In some example embodiments of the sixth step 116, the Responding UEs may transmit to the Requesting UE their measured CBR values and/or respective CBR Descriptor. The reported CBR values of the UEs in the prediction zone may provide an indication of the channel congestion, considering the current number of UEs, their location as well as their data traffic requirements. The CBR descriptor may include information such as the time of measurement, location of measurement, UE speed etc. The Responding UE may therefore determine whether they are in the prediction zone within prediction time horizon. The Responding UE may stop providing measurements at the point that goes out of the prediction zone to avoid reporting information that may be redundant.

In some example embodiments of the sixth step 112, the Responding UE may determine whether their reporting is needed and should be transmitted according to the criteria (i.e. Reporting condition) that is set by the Requesting UE e.g., Remote/Relay UE.

In a seventh step 117, the collected information from steps 113 and 114 and optionally the received CBR measurements (step 116) together with respective CBR descriptor information (e.g., location, timing, velocity) are used by the Requesting UE to derive CBR predictions in the prediction zone.

In some example embodiments of the seventh step 117, the measured CBR of the Requesting UE, the estimated CBRs from detected SCIs together with RRI information may be used for the estimation of expected/predicted CBR in the prediction zone. In addition, the received CBR measurements of the reporting UEs in the prediction zone associated with other CBR descriptor information (e.g., time of measurement, location of measurement) may be processed by the Requesting UE to provide a good estimation of PC5 channel congestion conditions (expressed in CBR) of a future location of the remote UE (and/or the relay UE).

Additional information from the UEs in the prediction zone may be used by the prediction engine of the Requesting UE, to derive more accurate predictions of the future PC5 channel congestion conditions and specifically about the evolution of the CBR along the prediction horizon. For example, the information may include:
- Statistical information e.g., expected data traffic related to the time of day received by the NW (e.g., NEF, NWDAF, or the PCF using policy rules and parameters);
- Mobility profile (speed, direction) of UEs in the prediction zone;
- AI/ML applied on prior stored data (history) with e.g.. location related CBR, CBR slope evaluation, mobility profile of UEs (speed, direction);
- Channel profile information of the area that is part of the prediction zone, which can provide an indication of required resources, considering the data traffic requirements.

This information may help to estimate whether/how the resource requirements may change in the prediction zone and/or the numbers of UEs of the topology.

In some example embodiments of the seventh step, the CBR prediction may be determined for sub-zones of the prediction zone for different time instances (T1, T2, ....) to simplify the CBR prediction problem.

In an eighth step 118, if the predicted CBR at a future point in time within the determined prediction zone (geographical area) is above a CBR threshold, which is an indication of high congestion and potential QoS degradation then a maintenance action is triggered and the process moves to the ninth step 119.

In some example embodiments, in the eighth step 118, the requesting UE may determine that a specific area having a CBR threshold that above a specific value may be characterized as highly congested.

In some example embodiments, in the eighth step 118, the CBR threshold may be provided by the PCF or an Application Function (AF).

In some example embodiments, in the eighth step 118, the Requesting UE may estimate the variance of the reported CBR values for identified locations in the prediction zone. If the variance of the CBR for a specific location is below a threshold (CBR Variance Threshold) then it may be considered as a reliable or accurate input to make decisions for proactive maintenance of the MP/SP relay and trigger a reconfiguration or adaptation action.

In a ninth step 119, the requesting UE with the assistance of the predicted CBR values, selects and configures the appropriate action to adapt the single-path and/or multi-path transmission and maintain the QoS for the targeted services.

In some example embodiments, in the ninth step 119, a reconfiguration, adaptation or maintenance action may be selected and/or configured, by the Requesting UE or the BS (in case that the BS is involved). In some examples, with the assistance of the predicted CBR. For example, such as actions may include one or more of:
- relay reselection (applicable for SP or MP with U2N relay);
- reconfiguration of CBR thresholds (applicable when the UE has SL communications in mode 2 with other UE(s) in general);
- reconfiguration of respective mode 2 RP (applicable in general);
- mode 1 resource allocation to the UE, remote UE and/or relay UE (applicable for UE in CONNECTED in general);
- (re)configuration of UL CG to remote UE and/or relay UE (applicable for SP or MP with U2N relay); or
- (re)configuration of data split/duplication to remote UE and/or relay UE (specific to MuiP).

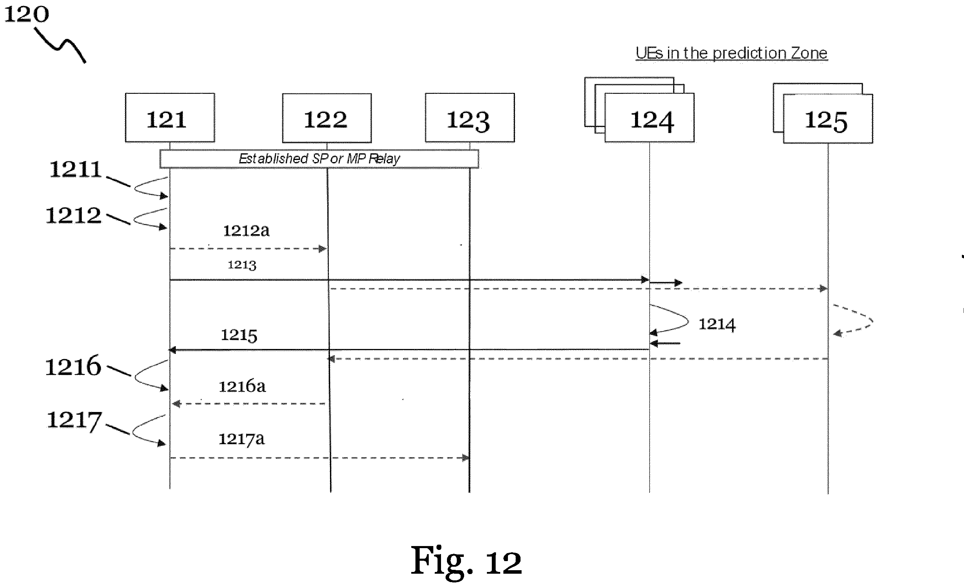

Fig. 12 illustrates a message sequence flow, indicated generally by reference numeral 120, according to one or more example embodiments.

In some example embodiments, a multi-path relay has been established between a remote UE 121, relay UE 122 and a third UE or BS 123 (referred to hereafter as BS 123). In some example embodiments, a packet duplication mode configuration (i.e. Duplicated Connectivity Case) and the CBR prediction may have been triggered by the Remote UE 121 for proactive service maintenance. In some example embodiments, the message sequence 120 implements the flow diagram 110 described above in relation to Fig. 11.

In a first step 1211, CBR prediction may be trigger and a prediction zone may be determined. For example, due to a triggering event (e.g., when the RSRP of the direct Uu link is below a predefined or configured threshold) the Remote UE 121 initiates the procedure for the prediction of the CBR in a future location of the MP Relay 122 (which involves the future location of the Remote UE 121 and/or the Relay UE 122). The Remote UE 121 determines the prediction zone from which CBR prediction is needed.

In a second step 1212, the Remote UE 121 (and/or Relay 122) may monitor signals (e.g. SCI) from monitoring nodes 124, 125 for CBR prediction and/or establish if there is sufficient information to predict CBR in the prediction zone. For example, based on detected SCI messages the Remote UE 121 identifies whether the collected information cover the defined prediction zone and whether CBR prediction is accurate enough; if not additional information is needed and a third step 1213 is initiated. In some embodiments, optional step 1212a may be used to notify the relay UE 122 to initiate it's own CBR prediction. For example, step 1212a may comprise the Remote UE 121 notifying the Relay UE 121 to initiate also its own CBR prediction procedure, indicating its prediction zone.

In a third step 1213, the Remote UE 121 may request a CBR measurement from monitoring UEs 124,125. For example, the Remote UE 121 (and/or Relay UE 122) request CBR measurements from one or more monitoring UEs 124, 125 located in a defined prediction zone. The Requesting UE (which may be the Remote UE 121 or Relay UE 122) has provided indication of (for example, in a CBR Monitoring Request message): the Prediction Zone, the CBR_measurement_period, the Reporting delay, or (optionally) the reporting condition.

In a fourth step 1214, the monitoring UEs 124, 125 monitor CBR based on the received filter information from the Remote UE 121. For example, the UEs 124, 125 in the prediction zone may monitor their CBR for a period of time (for example, as indicated by the CBR_measurement_period and other Reporting condition parameters). Each measured and logged CBR may be associated with CBR descriptor information such as the time of measurement, location of measurement, and corresponding UE 124, 125 speed.

In a fifth step 1215, the monitoring UEs 124, 125 may provide CBR measurements and CBR descriptor information. For example, each monitoring UE 124, 135 may provide to the Remote UE 121 (or the Relay UE 122) the list of CBR measurements and the associated CBR descriptor information. This may be after the end of the CBR measurement period indicated in the request message.

In a sixth step 1216, the Remote UE 121 may predict the CBR in the prediction zone. For example, the Remote UE 121 (and optionally the Relay UE 122) predicts the expected CBR (with confidence intervals of the derived predictions) at the identified locations in the prediction horizon (as an example, for the scenario in Fig. 8, the identified location may be one or more of 18b, 18c, 88b or 88c), based on the PC5 CBR measurements collected from the relevant monitoring UEs 124, 125 in the prediction zone and the associated CBR descriptor information. In some embodiments, optional step 1216a may be used wherein the Relay UE 122 notifies the Remote UE 121 it's predicted CBR. For example, in step 1216a, the Relay UE 122 may also initiate a CBR prediction process. The Relay UE 122 may notify the Remote UE 121 about the outputs of its predicted CBR values in its own prediction zone.

In a seventh step 1217, the Remote UE 121 may trigger a proactive reconfiguration action using the predicted CBR. For example, the Remote UE 121 (for example, based on predicted CBR) triggers proactive maintenance by applying an early adaptation e.g., Relay UE reselection to ensure service continuity. In some embodiments, optional step 1217a may be used wherein the Remote UE 121 notifies the BS 123 of a predicted CBR. For example, in step 1217a, the Remote UE 121 may notify the BS 123 about the predicted CBR in the defined prediction zone. The BS 123 may be involved in the decision-making process for relay adaptation and/or reconfiguration of the SL resource pools to maintain QoS of the remote UE 121 etc.

The above-mentioned messages between the Remote UE 121 and Relay UE 122 as well as among the monitoring UEs 124, 125 in the prediction zone and the Remote UE 121 and/or Relay 122 can be exchanged via dedicated PC5-RRC messages or can be carried in the MAC Control element (CE) using broadcast, groupcast or unicast SL transmission.

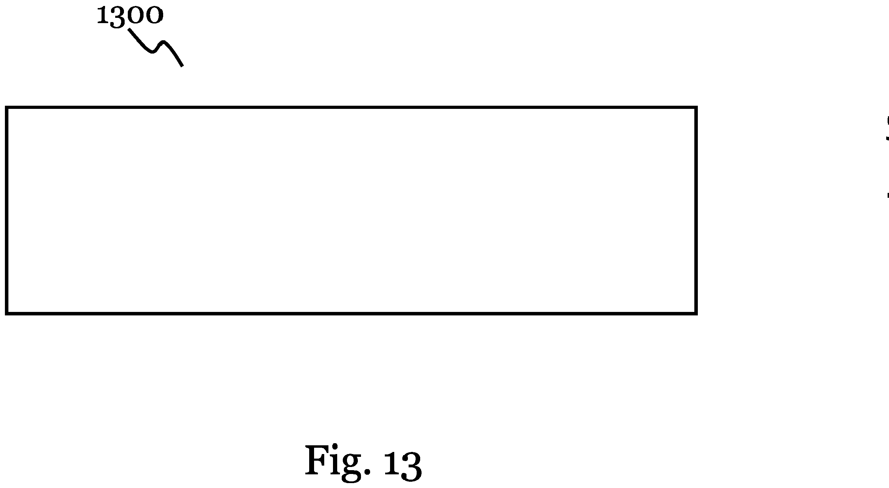

Fig. 13 illustrates an apparatus, indicated generally by reference numeral 1300, according to one or more example embodiments.

In some example embodiments, the apparatus 1300 is configured to request at least one UE located in a prediction zone to transmit a message to the apparatus comprising information related to a CBR that said at least one UE measures at its respective location.

In some example embodiments, the apparatus 1300 is configured to request at least two UEs located in a prediction zone to transmit a message to the apparatus comprising information related to a CBR that said at least one UE measures at its respective location.

In some example embodiments, the apparatus 1300 is further configured to receive the requested message from said UE through a respective sidelink communication.

In some example embodiments, the apparatus 1300 is further configured to determine that the received information is sufficient for the apparatus 1300 to make a prediction of a new value of the CBR corresponding to a subsequent period of time.

In some example embodiments, the apparatus 1300 is further configured to, in response to determining that sufficient information is available, use said information to predict said new CBR value.

In some example embodiments, the prediction zone is determined by the apparatus 1300 or by another apparatus or entity.

### Example Apparatus

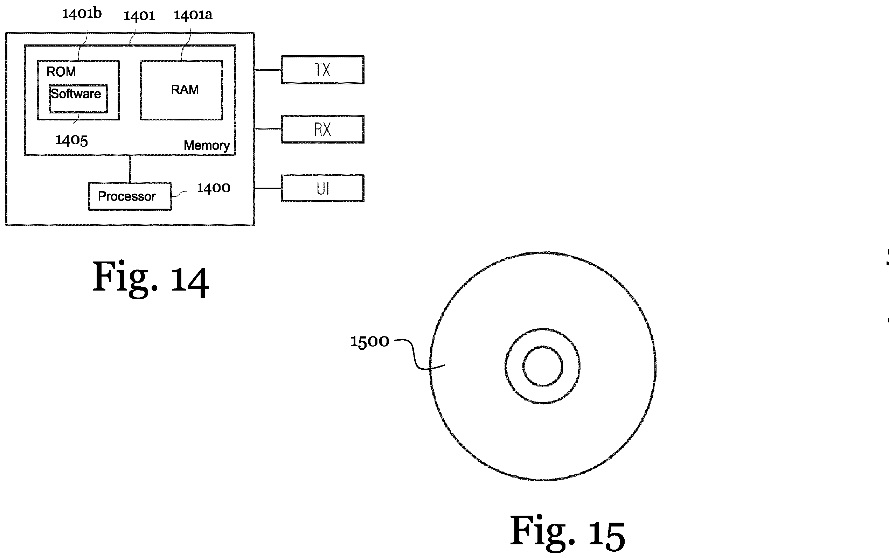

Fig. 14 shows an apparatus according to some example embodiments, which may comprise the user terminal 1401. The apparatus may be configured to perform the operations described herein, for example operations described with reference to any disclosed process. The apparatus comprises at least one processor 1400 and at least one memory 1401 directly or closely connected to the processor. The memory 1401 includes at least one random access memory (RAM) 1401a and at least one read-only memory (ROM) 1401b. Computer program code (software) 1405 is stored in the ROM 1401b. The apparatus may be connected to a transmitter (TX) and a receiver (RX). The apparatus may, optionally, be connected with a user interface (UI) for instructing the apparatus and/or for outputting data. The at least one processor 1400, with the at least one memory 1401 and the computer program code 1405 are arranged to cause the apparatus to at least perform at least the method according to any preceding process, for example as disclosed in relation to the flow diagrams of FIGs. 5 and/or 11 and related features thereof.

Fig. 15 shows a non-transitory media 1500 according to some embodiments. The non-transitory media 1500 is a computer readable storage medium. It may be e.g. a CD, a DVD, a USB stick, a blue ray disk, etc. The non-transitory media 1400 stores computer program code, causing an apparatus to perform the method of any preceding process for example as disclosed in relation to the flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:
means for predicting, for a first node at a first location, at least one second location(s) of said first node, wherein said first node is configured to transfer data to a second node via a first sidelink, wherein said first and second nodes are part of a mobile communications network;
means for estimating a first radio parameter of said first sidelink at said second location(s); and
means for determining, based on said estimated first radio parameter, if said first sidelink at said second location(s) meets at least one selection criterion.

2. An apparatus according to claim 1, further comprising means for determining a reconfiguration action if said first sidelink does not meet said selection criterion at said second location(s).

3. An apparatus according to claim 2, wherein said reconfiguration action is determined based on said predicted second location(s).

4. An apparatus according to claim 2 or 3, wherein said reconfiguration action comprises at least one of: changing a resource of said first sidelink; changing said selection criterion; establishing a second sidelink between said first node and a third node, wherein said second sidelink meets said selection criterion; or transferring at least part of said data using a datalink between said first node and a base station.

5. An apparatus according to any preceding claim, wherein said means for estimating comprises at least one of:
a means for estimating a signal strength of said first sidelink at said second location(s);
a means for estimating a congestion level of a resource of said first sidelink at said second location(s);a means for estimating a channel busy ratio or channel occupancy ratio; a means for receiving a first message from a fourth node located in a prediction zone substantially around said second location(s).

6. An apparatus according to any preceding claim, further comprising means for predicting, for said second node at a third location, at least one fourth location(s) of said second node.

7. An apparatus according to any preceding claim, wherein said means for estimating a first radio parameter comprises a model configured to estimate said first radio parameter at said second location(s) based on measurements or indicators of said first radio parameter at a plurality of other locations.

8. An apparatus according to any preceding claim, wherein said second node is configured to relay said data from said first node to a fifth node or to said first node from a fifth node.

9. An apparatus according to any preceding claim, wherein said means for predicting comprises a means for receiving said second location(s) from a first entity.

10. An apparatus according to any preceding claim, wherein said second location(s) is different from said first location.

11. An apparatus according to any preceding claim, wherein said means for predicting is triggered by an event or a third message from a second entity.

12. An apparatus according to any preceding claim, wherein said apparatus is said first node.

13. A user equipment comprising an apparatus according to any preceding claim.

14. A method comprising:
predicting, for a first node at a first location, at least one second location(s) of said first node, wherein said first node is configured to transfer data to a second node via a first sidelink, wherein said first and second nodes are part of a mobile communications network;
estimating a first radio parameter of said first sidelink at said second location(s); and
determining, based on said estimated first radio parameter, if said first sidelink at said second location(s) meets at least one selection criterion.

15. A computer program comprising instructions for causing an apparatus to perform at least the following:
predicting, for a first node at a first location, at least one second location(s) of said first node, wherein said first node is configured to transfer data to a second node via a first sidelink, wherein said first and second nodes are part of a mobile communications network;
estimating a first radio parameter of said first sidelink at said second location(s); and
determining, based on said estimated first radio parameter, if said first sidelink at said second location(s) meets at least one selection criterion.
